# EUROPEAN PATENT APPLICATION

(11) **EP 1 014 546 A1**
(43) Date of publication of application: **28.06.2000**
(21) Application number: 98870277.5
(22) Date of filing: 23.12.1998
(51) Int. Cl.: H02K 57/00, H02K 19/10, H02K 29/10

(54) **Optically controlled reluctance or hysteresis motor**

(71) Applicant: S.C. NDR Management S.r.l., Constanza (RO)
(72) Inventor: De Vadder, Paul Alfons Dominique, Vaduz (LI); Allaert, Hendrik Marie Marcel Eduard, 9100 Sint-Niklaas (BE); De Bock, Guido Prosper Richienne, 2440 Geel (BE)
(74) Representative: Van Straaten, Joop

(57) **Abstract**

A device comprises a rotor in a rotor chamber in a stator. The rotor performs a rotational movement. The device thus forms a reluctance motor. The rotor comprises a radial driven element comprising magnetisable material, and the stator comprises two surfaces (on both sides of the rotor) each with a multitude (more than 8) of electro-magnets, which are coupled to selection means to selectively connect the electro-magnets to supply means Magnetic fields of selected orientation and strength are generated in such manner that at opposite sides of the rotor inverse magnetic fields are present.

## Description

The invention relates to a device comprising a rotor in a rotor chamber in a stator, the rotor performing a rotational movement, forming a reluctance motor.

Reluctance motors, also called hysteresis motors exist already. For a long time they were considered dangerous, because of the difficulty to adjust the speed. In particular it is difficult to impede dangerously high speeds in some cases of no load and to accurately control the speed of the rotor. Such speed variations cause vibrations and noises which reduce the efficiency of the device as well as may be a cause of insecurity. Vibrations may induce loosening of parts which may cause noises to be generated or dangerous situations to arise.

With the introduction of the electronic components for static converters and similar devices, this type of motor became again actual.

A special type of these motors is the switched reluctance motor in which the stator field changes constantly.

The invention has an object to provide an improvement of this type of motors, because the existing ones have problems with vibration and noises.

To this end the rotor of the device in accordance with the invention comprises a radial driven element (preferably a disc) comprising (preferably being made of) magnetisable material, preferably with low H (around or lower than 100 KAm-1) and high B (around or higher than 1.25 Tesla).

The stator of the device in accordance with the invention comprises two surfaces (on both sides of the rotor) with a multitude (more than 8) of electro-magnets, which are coupled to selection means to selectively connect the electro-magnets to supply means for generating magnetic fields of selected orientation and strength in such manner that at opposite sides of the rotor inverse magnetic fields are generated. When two cores on one side of the rotor generate a magnetic field on one side, the inverse (i.e. of opposite sign and of approximately the same strength) magnetic field is formed on the other side. The field on both sides of the rotor, i.e. on the two surfaces will always be inverted.

The field will change constantly according to changing connections to the supply means. The switching, controlling the connections, in combination with the arrangement and the number of the electro-magnets enables a much better control of the driving of the rotor and thereby a reduction in or even elimination of vibrations and noise.

Preferably the selection means comprise an electrical switching means in series with a layer of powder or liquid comprising a magnetisable material coupled to or in close proximity to a number, or preferably each of the electromagnets and means to selectively create electromagnetic barriers in the layer. The magnetisable material in the layer align along the field lines and magnetically couple the magnetic fields generated by electromagnets. Electro-magnetic barriers, however, prevent such alignment of the magnetisable material and sever the electromagnetic coupling between electromagnets. By selectively creating electromagnetic barriers selective magnetic coupling is thus achievable.

Preferably the means to create electromagnetic barriers comprise means to apply an electric field of high strength locally to the layer. Such electric fields provide a capacitance effect between the means and the layer. This capacitance effect prevents magnetic coupling between electromagnets at either side of the capacitance and thus provides an electromagnetic barrier. Such electric fields can be created and removed in high frequency so that a very fast and efficient selection is possible.

Preferably the magnetisable material of the layer exhibits a small index for the hysterisis loss, preferably less than 6 KJ/m3. If the index for the hysterisis loss is larger the coupling between the electromagnets is too weak. As a result the magnetic fields generated by the electromagnets extend to a greater degree in surrounding parts of the stator, inducing Eddy currents therein. This results in increased energy losses in the stator and a higher temperature of the stator.

Preferably the layer comprises a powder in granular form. Powder in granular form provides for an increased capacitance effect, thus increasing the barrier effect and the efficiency of the device.

Preferably the device is provided with an inert medium in contact with the layer. This reduces the risk that the magnetisable material reacts with the atmosphere inside the stator, such reactions could change the magnetic properties of the magnetisable material and thereby influence detrimentally the magnetic coupling provided by the layer. Inert media are for instance helium or argon. Helium is especially preferred because of its extreme inertness and favourable electrical properties.

In order to do a correct switching it is preferred to know at each moment the exact position of the rotor. In order to obtain this, a position indicator to indicate the position of the rotor vs the stator is preferably part of the device. The position indicator preferably comprises means to measure the position by means of optical signals. The switching of the cores is preferably done with an optical cable and an opto-electronic "Insulated Gate Bipolar Transistor' with low power values. Those IGBT's are located in an optical layer on the print plate of the stator, coupled to the wires of each core.

These and further aspects of the invention will below be described, illustrated by means of the drawings.

In the drawings:
Fig. 1 schematically shows a device in accordance with the invention.
Fig. 2 further illustrates a device in accordance with the invention.
Fig. 3A and 3B illustrate magnetic coupling and decoupling of magnets
Fig. 4 illustrates an optical measuring means to measure the position of the rotor vs the stator.

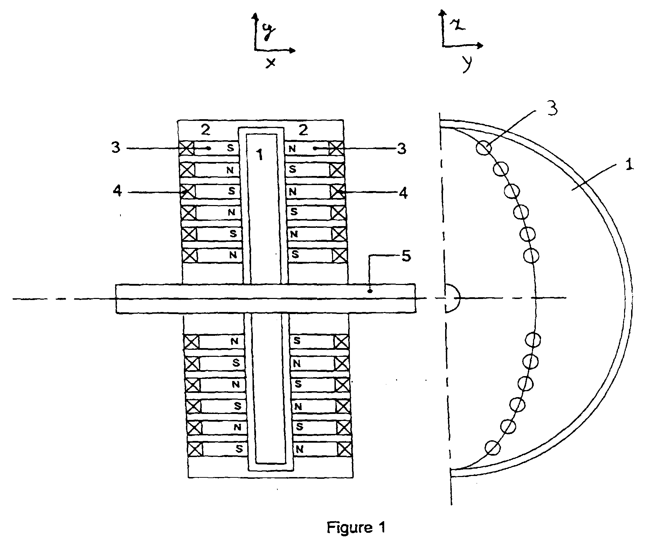

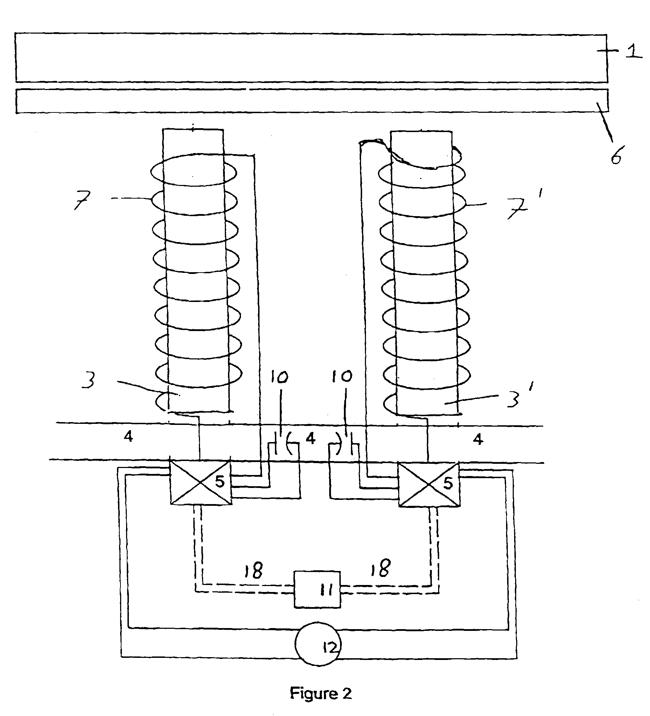

Figure 1 schematically shows a device in accordance with the invention. The correct inverted switching is illustrated in Figure 1. Rotor (1) is turning inside the stator (2) around the axe (5). The electromagnets (3) are coupled with IGBT's (5), see figure 2, located inside the stator. The electromagnets 3 generate magnetic fields which are oriented in such a way that the rotor will receive forces for a circular movement of the rotor.

The functioning of the cores is illustrated in Figure 2. The two cores (3, 3') with the wires (7, 7') are connected with the IBGT's (5). Magnetically the cores are connected by the magnetic connection medium (4), which is controlled by the switching system. The IBGT's (5) are connected to the opto-signal emitter (11) and to a pulsed alimentation (12). Rotor 1 is also shown, as is the part 6 of the stator nearest to the rotor.

The advantage of switching in transistors with optical commands, is that this process reduces or eliminates completely parasites of high frequency in wide bands, that disturbs telecommunications. Other parasites of disharmony are also eliminated by cascade switching of low value elements, which will also reduce or eliminate vibration and noises. Finally, using adequate cooling and a good Faraday cage effect, risk for parasites may be further reduced.

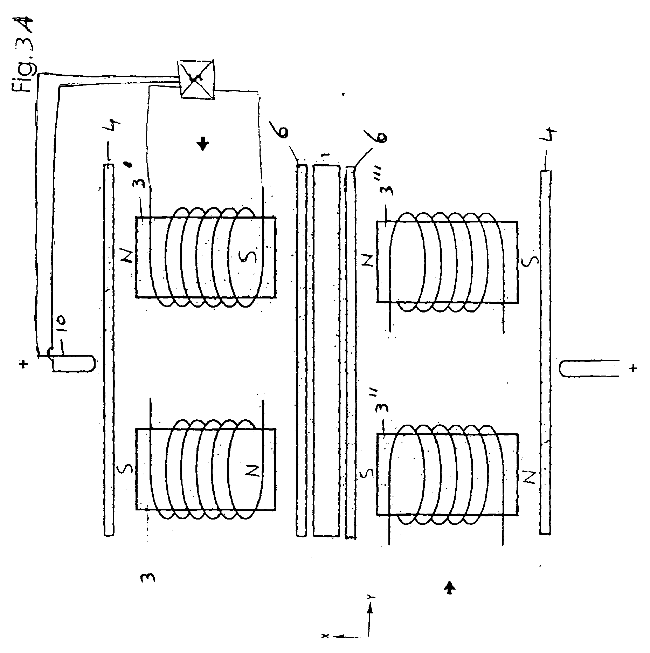

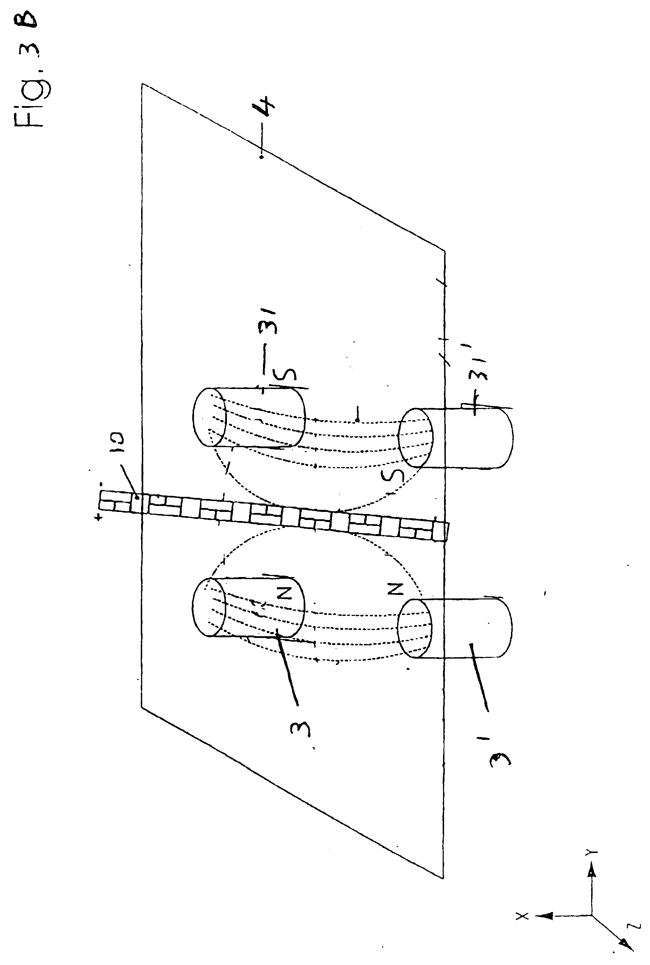

Figures 3A and 3B show a preferred embodiment of means for selectively providing magnetic couplings between electromagnets. Close to or in contact with the electromagnets 3, 3', 3'', 3''' a layer 4 comprising a powder or liquid of magnetisable material is provided (see figure 3A). The magnetisable material comprising for instance iron powder. The layer 4 provides for magnetic couplings between electromagnets 3, 3', 3'' and 3'''. Each of the electromagnets is provided with a coil. The coils are connected to each other by means of connections. When coils are electrically connected to each other, they are magnetically coupled to each other via layer 4. When the electrical connection between the coils is removed the magnetic coupling is still present. To break the magnetic couplings means 10 are provided. Said means 10, which in this example comprise needles or hairs at high electrical potential, close to, but not touching the layer 4 provide in operation strong electrical fields in the order of 20-100 kVolt over a gap between the means 10 and the layer in the order of 10-200 microns. Capacitive coupling between means 10 and layer 4 induce in the layer strong electrical fields. Such fields have been found to prevent the layer 4 from establishing magnetic coupling. Therefor, when means 10 is activated, electromagnets 3 and 3' (or when the means 10 at the opposite side are activated electromagnets 3'' and 3''') are magnetically decoupled. The means 10 can be accurately, reliably and fast selectively activated. Figure 3B shows that the magnetic lines do run from electromagnet 3 to electromagnet 3', but not, or in a much smaller degree from electromagnet 3 to 31. These electromagnets are thus decoupled, because of the barrier created by means 10. 6 denotes a side wall of the rotor chamber in which rotor 1 is present. The provision of the layer 4 has the added advantage that the fields of the electromagnets do not, or only to a strongly reduced degree extend outside the layer 4. The stray fields generated by the electromagnets are thus reduced, or in other words, the layer 4 acts as an magnetic shield. Stray fields can negatively interfere with electronic devices placed in the vicinity of the device from which the stray fields originate. Reduction of the stray fields means that such problems are reduced, enabling electronic devices to be placed closer to the device, thus reducing the effective space needed for the device. Preferably the layer 4 does not come into contact with gases or materials which could react with the layer, since such reactions could alter the composition of the layer, and thereby reducing the coupling efficiency of the layer. Preferably inside the stator an inert medium is provided, preferably Helium, which is an inert gas and has excellent electrical properties.

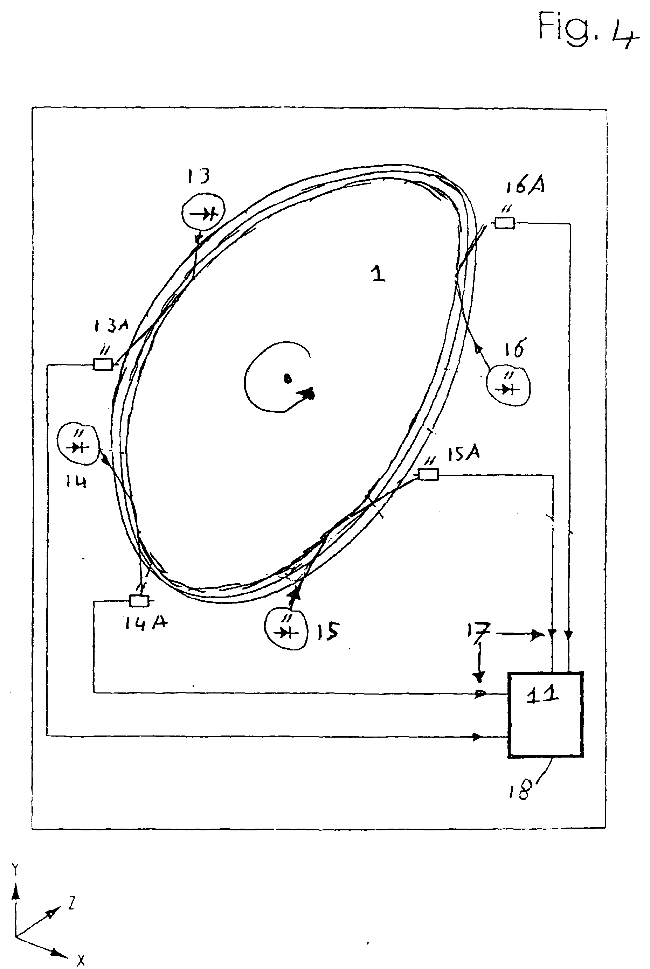

Figure 4 illustrates means for optically measuring the position of the rotor vs the stator. Four light sources 13, 14, 15 and 16, emit different light signals, in this preferred example light of different colour. The light is reflected on the rotor 1 inside the rotor chamber. Four receiving means 13a, 14a, 15a and 16a, each tuned to the signals emitted by the corresponding light source, receive light and send signals 17 to a device 11. This device calculates from the signals the position of the rotor and provides a measurement signal 18. Such signal is preferably sent to the IBGT's 5 (Figure 1), which uses the information of the measurement to influence, if needed, the stator magnetic field, e.g. in the strength or timing of the fields generated by the electromagnets. Preferably the means for measuring comprise optical sensors, e.g. for locally measuring the distance between the rotor and stator. Using optical sensors has the advantage that the relative position of rotor and stator is measured by means of a non-contact measurement. Contact measurement may induce damages to rotor and/or stator thus reducing the efficiency and/or life-time of the device. Electrical non-contact measurement may induce stray signals which may impair the functioning of the device. Using different light signals and receiving means tuned to these signals (by for instance placing a filter in front of the means 13a etc, which only transmits light of the colour emitted by light sources 13 etc) has the advantage that stray light emitted by light source 14 does not influence the measurement of receiving means 13a, stray light emitted by light source 13 does not influence the measurement of receiving means 14a etc. The accuracy of the measurements is thereby greatly increased. In the example the light is reflected of the edge of the rotor. Two of the light source and corresponding receiving means are positioned such that the signal is received by the receiving means when the end of the rotor is very close to the light source. This has the advantage that even a very small change in the position of the rotor causes a relatively large change in the position of the light beam near the receiving means. This increases the accuracy of the measurement. Preferably a number of light sources and receiving means, for instance and preferably four, are provided which are positioned such that the ideal rotor position corresponds to a situation where the light signals are simultaneously received by the receiving means. This allows for an increased speed of measurement and accuracy and simplicity of the data analysis.
Optical fibres are preferred to emit the signal and receive the signal. For instance laser light is coupled into an optical fibre the end of which constitutes light source 13. One end of second optical fibre forms part of receiving means 13A, the other end being coupled to a light measuring device. The lasers and light measuring devices are in such embodiments placed at some distance of the rotor chamber, which has the advantage that there can be no interference of electric and magnetic fields generated in and near the rotor chamber on the measurement.

Also, controlling the exact position of the rotor, it will be possible to impede dangerously high speeds in some cases of no load.

In will be clear that within the framework of the invention many variations are possible and the invention is not restricted to the above given exemplary embodiments.

## Claims

1. Device comprising a rotor in a rotor chamber in a stator, the rotor performing a rotational movement, forming a reluctance motor, characterised in that rotor comprises a radial driven element comprising magnetisable material, and in that the stator comprises two surfaces (on both sides of the rotor) each with a multitude (more than 8) of electro-magnets, which are coupled to selection means to selectively connect the electro-magnets to supply means for generating magnetic fields of selected orientation and strength in such manner that at opposite sides of the rotor inverse magnetic fields are generated.

2. Device as claimed in claim 1, characterised in that the selection means comprise an electrical switching means in series with a layer of powder or liquid comprising a magnetisable material coupled to or in close proximity to a number, or preferably each of the electromagnets and means to selectively create electromagnetic barriers in the layer.

3. Device as claimed in claim 1 or 2, characterised in that the means to create electromagnetic barriers comprises means to apply an electric field of high strength locally to the layer.

4. Device as claimed in any of the preceding claims, characterised in that the device comprises a position indicator to indicate the position of the rotor vs the stator.

5. Device as claimed in claim 4, characterised in that the position indicator in operation generates optical signals.

6. Device as claimed in any of the preceding claims, characterised in that the selection means comprises opto-electronic switches coupled to supply means to the electromagnets.
